# EUROPEAN PATENT APPLICATION

(11) **EP 4 712 565 A1**
(43) Date of publication of application: **18.03.2026**
(21) Application number: 23945369.9
(22) Date of filing: 14.07.2023
(51) Int. Cl.: H04W 36/08

(54) **COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); LIN, Xue, Dongguan, Guangdong 523860 (CN)
(74) Representative: Penza, Giancarlo
(86) International application number: PCT/CN2023/107571
(87) International publication number: WO 2025/015470

(57) **Abstract**

The present application relates to a communication method, a terminal device, and a network device. The method comprises: when executing a first handover to one or more candidate cells, a terminal device determines, on the basis of first scene information, whether to perform security updating and/or layer-2 processing. According to embodiments of the present application, the security updating and/or layer-2 processing can be flexibly controlled on the basis of scene information in the handover process.

## Description

### TECHNICAL FIELD

The present disclosure relates to the communication field, in particular to a communication method, a terminal device and a network device.

### BACKGROUND

Similar to a Long Term Evolution (LTE) system, a New Radio Access (NR) system supports a handover process for User Equipment (UE) in a connected state. There are many reasons for handover, for example, UE using network services moves from one cell to another cell, adjustments in wireless transmission traffic load, activation of operation and maintenance, equipment failures, and so on. To ensure communication continuity and service quality, a communication link between the UE and an original cell can be transferred to a new cell, that is, the handover process is performed.

### SUMMARY

Embodiments of the present disclosure provide a communication method, a terminal device, and a network device, which can flexibly control a security update and/or Layer 2 processing in a handover process.

The embodiments of the present disclosure provide a communication method, which includes the following operation.

The terminal device determines whether to perform a security update and/or Layer 2 processing based on first scenario information, when the terminal device is to perform a first handover to one or more candidate cells.

The embodiments of the present disclosure provide a communication method, which includes the following operation.

The network device sends a candidate cell configuration, where the candidate cell configuration is used to assist a terminal device in performing a first handover.

The embodiments of the present disclosure provide a terminal device, including a processing unit.

The processing unit is configured to determine whether to perform a security update and/or Layer 2 processing based on first scenario information, when the terminal device is to perform a first handover to one or more candidate cells.

The embodiments of the present disclosure provide a network device, including a first sending unit.

The first sending unit is configured to send a candidate cell configuration, where the candidate cell configuration is used to assist a terminal device in performing a first handover.

The embodiments of the present disclosure provide a terminal device, including a processor and a memory. The memory is configured to store a computer program, and the processor is configured to call and execute the computer program stored in the memory to cause the terminal device to perform the above communication method.

The embodiments of the present disclosure provide a network device, including a processor and a memory. The memory is configured to store a computer program, and the processor is configured to call and execute the computer program stored in the memory to cause the network device to perform the above communication method.

The embodiments of the present disclosure provide a chip, which is configured to implement the above communication method.

Specifically, the chip includes a processor, which is configured to call and execute a computer program from a memory to cause a device equipped with the chip to perform the above communication method.

The embodiments of the present disclosure provide a computer-readable storage medium, having stored thereon a computer program that, when run by a device, causes the device to perform the above communication method.

The embodiments of the present disclosure provide a computer program product, including computer program instructions that cause a computer to perform the above communication method.

The embodiments of the present disclosure provide a computer program that, when running on a computer, causes the computer to perform the above communication method.

According to the embodiments of the present disclosure, the security update and/or the Layer 2 processing can be flexibly controlled based on scenario information in the handover process. For example, the method guarantees that terminal devices can support consecutive handovers, guarantees service continuity, and reduces signaling overhead caused by frequent security updates/Layer 2 processing.

### BRIEF DESCRIPTION OF THE DRAWINGS

FIG. 1 is a schematic diagram of an application scenario according to an embodiment of the present disclosure.
FIG. 2 is a schematic diagram of a cell handover flow across base stations.
FIG. 3 is a schematic flowchart of a communication method according to an embodiment of the present disclosure.
FIG. 4 is a schematic flowchart of a communication method according to another embodiment of the present disclosure.
FIG. 5 is a schematic flowchart of a communication method according to another embodiment of the present disclosure.
FIG. 6 is a schematic flowchart of a communication method according to an embodiment of the present disclosure.
FIG. 7 is a schematic flowchart of a communication method according to another embodiment of the present disclosure.
FIG. 8 is a schematic block diagram of a terminal device according to an embodiment of the present disclosure.
FIG. 9 is a schematic block diagram of a terminal device according to another embodiment of the present disclosure.
FIG. 10 is a schematic block diagram of a network device according to an embodiment of the present disclosure.
FIG. 11 is a schematic block diagram of a network device according to another embodiment of the present disclosure.
FIG. 12 is a schematic block diagram of a communication device according to an embodiment of the present disclosure.
FIG. 13 is a schematic block diagram of a chip according to an embodiment of the present disclosure.
FIG. 14 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure.

The technical solution of the embodiments of the present disclosure may be applied to various communication systems. For example, a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of NR system, a LTE-based access to unlicensed spectrum (LTE-U) system, a NR-based access to unlicensed spectrum (NR-U) system, a Non-Terrestrial Networks (NTN) system, a Universal Mobile Telecommunication System (UMTS), a Wireless Local Area Networks (WLAN), a Wireless Fidelity (Wi-Fi), a 5th-Generation communication system or other communication systems.

Generally speaking, conventional communication systems support a limited number of connections and are easy to implement. However, with the development of communication technology, mobile communication systems will not only support conventional communications, but also support, for example, Device to Device (D2D) communication, Machine to Machine (M2M) communication, Machine Type Communication (MTC), Vehicle to Vehicle (V2V) communication, Vehicle to everything (V2X), etc. Embodiments of the present disclosure may also be applied to these communication systems.

In an implementation, the communication system in the embodiments of the present disclosure may be applied to a Carrier Aggregation (CA) scenario, a Dual Connectivity (DC) scenario, and a Standalone (SA) network distribution scenario.

In an implementation, the communication system in the embodiments of the present disclosure may be applied to an unlicensed spectrum, where the unlicensed spectrum may also be considered a shared spectrum. Alternatively, the communication system in the embodiments of the present disclosure may also be applied to a licensed spectrum, where the licensed spectrum may also be considered as a non-shared spectrum.

Embodiments of the present disclosure are described in connection with a network device and a terminal device. The terminal device may be referred to as user equipment (UE), an access terminal, a subscriber unit, a subscriber station, a mobile site, a mobile station, a remote station, a remote terminal, a mobile device, a user terminal, a terminal, a wireless communication device, a user agent, or a user device.

The terminal device may be a station (ST) in the WLAN, or it may be a cellular phone, a cordless phone, a Session Initiation Protocol (SIP) telephone, Wireless Local Loop (WLL) station, a Personal Digital Assistant (PDA) device, a handheld device with wireless communication function, a computing device or other processing device connected to wireless modem, an in-vehicle device, a wearable device, a next-generation communication system such as a terminal device in an NR network, or the terminal device in the future evolved Public Land Mobile Network (PLMN) network, etc.

In the embodiments of the present disclosure, the terminal device may be deployed on land, including indoor or outdoor, hand-held, wearable or in-vehicle. The terminal device may also be deployed on the water (such as ships). The terminal device may also be deployed on the air (such as airplanes, balloons and satellites).

In the embodiments of the present disclosure, the terminal device may be a Mobile Phone, a Pad, a computer with wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city or smart home, etc.

By way of example and not limitation, in the embodiments of the present disclosure, the terminal device may also be a wearable device. The wearable device may also be called a wearable intelligent device, which is a general name of wearable devices developed by applying wearable technology to intelligently design of daily wear, such as glasses, gloves, watches, clothing and shoes. The wearable device is a portable device that is worn directly on the body or integrated into the clothes or accessories of the user. The wearable device is not only a kind of hardware device, but also realizes powerful functions through software support, data interaction and cloud interaction. Generalized wearable smart devices have full functions and large size, which may realize all or partial functions without relying on smart phones, such as smart watches or smart glasses, and only focus on certain application functions, and the wearable smart devices need to be used in conjunction with other devices such as smart phones, such as various smart bracelets and smart jewelry for monitoring physical signs.

In the embodiments of the present disclosure, the network device may be a device for communicating with a mobile device, and the network device may be an Access Point (AP) in WLAN, a Base Transceiver Station (BTS) in GSM or CDMA, a base station (NodeB, NB) in WCDMA, an Evolutional Node B (eNB or eNodeB) in LTE, a relay station or an access point, or an in-vehicle device, a wearable device, a network device in NR network (gNB), a network device in future evolved PLMN network or a network device in NTN network, etc.

By way of example and not limitation, in embodiments of the present disclosure, the network device may have mobility characteristics, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, and the like. Optionally, the network device may also be a base station arranged on land, water and the like.

In the embodiments of the present disclosure, the network device may provide services for a cell, the terminal device communicates with the network device through transmission resources (e.g. frequency domain resources, or spectrum resources) used by the cell, the cell may be a cell corresponding to a network device (e.g. a base station), the cell may belong to a macro base station or a base station corresponding to a small cell. The small cell may include a metro cell, a micro cell, a pico cell, a femto cell, etc. These small cells have the characteristics of small coverage and low transmission power, and are suitable for providing high-speed data transmission services.

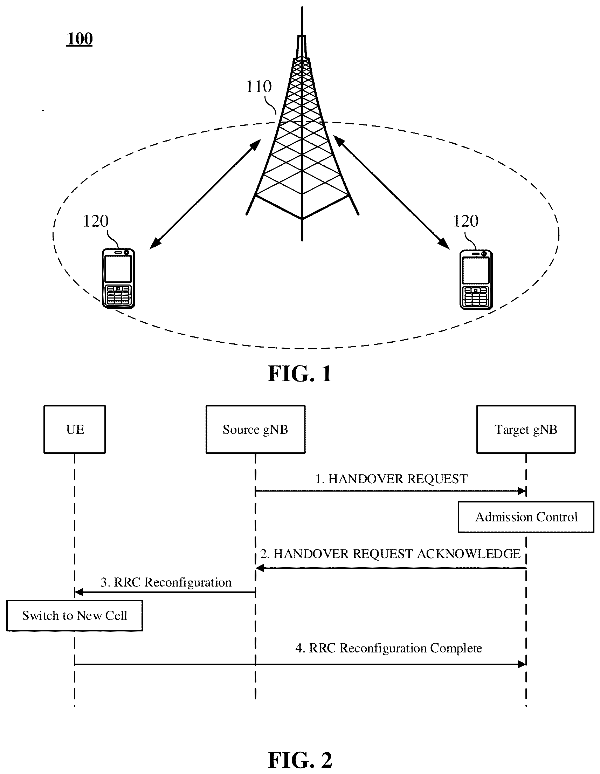

FIG. 1 exemplarily illustrates a communication system 100. The communication system includes a network device 110 and two terminal devices 120. In an implementation, the communication system 100 may include multiple network devices 110 and other numbers of terminal devices 120 may be included within the coverage of each network device 110, which is not limited by the embodiments of the present disclosure.

In an implementation, the communication system 100 may also include other network entities such as a Mobility Management Entity (MME), and an Access and Mobility Management Function (AMF), which are not limited by the embodiments of the present disclosure.

The network device may also include access network devices and core network devices. That is, the wireless communication system also includes multiple core networks for communicating with the access network devices. The access network device may be an evolutionary node B (eNB or e-NodeB), a macro base station, a micro base station (also referred to as a "small base station"), a pico base station, an access point (AP), a transmission point (TP) or a new generation Node B (gNodeB) in a long-term evolution (LTE) system, a next radio (NR) (mobile communication system) system or an authorized auxiliary access long-term evolution (LAA-LTE) system.

It is to be understood that a device having a communication function in a network/system in the embodiments of the present disclosure may be referred to as a communication device. Taking the communication system illustrated in FIG. 1 as an example, the communication device may include a network device and a terminal device having a communication function, the network device and the terminal device may be specific devices described in the embodiments of the present disclosure and will not be elaborated here. The communication device may also include other devices in the communication system such as network controllers, mobility management entities and other network entities, which are not limited by the embodiments of the present disclosure.

It is to be understood that the terms "system" and "network" of the present disclosure are often used interchangeably herein. In the present disclosure, the term "and/or" is used to describe an association relationship of associated objects, and represents that there may be three relationships. For example, A and/or B may represent the following three situations: independent existence of A, existence of both A and B, and independent existence of B. In addition, the character "/" in the present disclosure generally represents that the associated objects before and after it have an "or" relationship.

It is to be understood that the reference to "indicate" in the embodiments of the present disclosure may be a direct indication, may be an indirect indication, or may indicate an association relationship. For example, A indicates B, which may mean that A directly indicates B, for example, B may be obtained through A. It may also mean that A indirectly indicates B, for example, A indicates C, and B may be obtained by C. It may also indicate that there is an association relationship between A and B.

In the description of embodiments of the present disclosure, the term "correspond" may mean that there is a direct or indirect correspondence relationship between the two, may also mean that there is an association relationship between the two, and may also be a relationship between indicating and being indicated, configuring and being configured, etc.

In order to facilitate understanding of the technical solution of the embodiments of the present disclosure, related technologies of the embodiments of the present disclosure are described as follows. The following related technologies may be arbitrarily combined with the technical solution of the embodiments of the present disclosure as optional solutions, all of which belong to the protection scope of the embodiments of the present disclosure.

### I. Traditional handover process

FIG. 2 is a schematic diagram of the cell handover process across base stations. An example of the handover process is as follows.
1. A source base station triggers a handover based on Layer 3 (L3) measurement results reported by the terminal and sends a handover request (i.e., HANDOVER REQUEST) to a target cell via an Xn interface.
2. A target base station receives the handover request from the source base station and provides a Radio Resource Control (RRC) configuration for the target cell, which is then fed back to the source base station as part of a handover request acknowledge (i.e., HANDOVER REQUEST ACKNOWLEDGE).
3. The source base station sends an RRC reconfiguration message (i.e., RRCReconfiguration) to the UE to indicate the UE to initiate the handover process and sends RRC configuration information required for accessing the target cell.
4. The UE accesses the target cell and sends an RRC Reconfiguration Complete (i.e., RRCReconfigurationComplete) message to the target cell.

After UE receives the handover instruction, main behaviors of each protocol layer (e.g., Packet Data Convergence Protocol (PDCP), Radio Link Control (RLC), and Media Access Control (MAC)) on the UE are exemplified in Table 1:

**Table 1**

| Protocol layer operations | Handover requiring security update | Handover without security update |
|---|---|---|
| PDCP Layer | Reconstruction | PDCP Layer Data Recovery |
| RLC Layer | Reconstruction | Reconstruction |
| MAC Layer | Reset | Reset |

The security update may include an update key, an encryption/integrity protection algorithm, and the like, which may be explicitly indicated in the RRCReconfiguration message.

Whether to perform PDCP reconstruction, PDCP layer data recovery, or RLC reconstruction may be explicitly indicated in the RRCReconfiguration message.

The PDCP layer is mainly responsible for encryption/decryption and integrity protection of data in an Access Stratum (AS) layer.

### II. Subsequent conditional pscell addition or change (SCPAC)

R16 and R17 respectively introduced a conditional pscell addition/change (CPAC) process. The network configures the UE with one or more candidate cells and conditional information associated with the one or more candidate cells. After receiving the configuration, the UE continuously evaluates the configured candidate cells. When one or more candidate cells meet the conditions, the UE triggers the CPAC process. After completing the CPAC process, the UE releases all candidate cell configurations provided by the network.

To avoid frequent reconfiguration of CPAC configuration by the network, R18 further enhances the CPAC process, and may support the UE not to release candidate cell configurations after completing a conditional pscell addition (CPA) process or conditional pscell change (CPC) process, and continue evaluating candidate cells for subsequent CPAC processes.

Both L1/L2-triggered mobility (LTM) and SCPAC support consecutive handovers. During a handover process, the UE needs to perform key update only when a PDCP anchor changes, that is, the key update is required in inter-Centralized Unit (inter-CU)/inter-Secondary Node (inter-SN) scenarios. In related technologies, inter/intra-CU and inter/intra-SN scenarios are not visible to the UE. The communication method in the embodiments of the present disclosure can indicate a current handover scenario to the UE, thus enabling the UE to perform corresponding actions such as key update and L2 processing.

Furthermore, if the network configures an SN identifier for each candidate cell in the candidate cell configuration, the UE may determine whether to perform key update by comparing whether an SN identifier associated with the source cell is the same as an SN identifier associated with the target cell. The communication method provided in the embodiments of the present disclosure may include specific ways for the UE to determine whether to perform actions such as key update and L2 processing if the UE performs handover from the source cell to the candidate cell and after the UE performs a network-triggered pscell change.

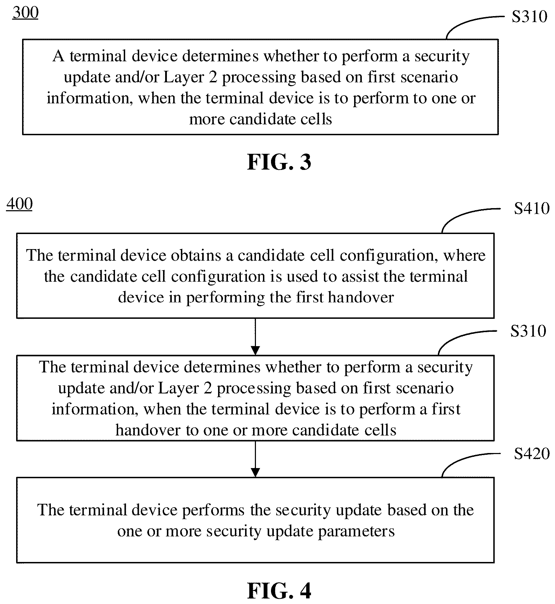

FIG. 3 is a schematic flowchart of a communication method 300 according to an embodiment of the present disclosure. Optionally, the method may be applied to the system illustrated in FIG. 1, but is not limited thereto. The method includes at least some of the following operations.

At S310, a terminal device determines whether to perform a security update and/or Layer 2 processing based on first scenario information, when the terminal device is to perform a first handover to one or more candidate cells.

In an embodiment of the present disclosure, the candidate cell may be pre-configured or configured to the terminal device by a network device. Under certain handover conditions, the terminal device may perform a single handover from a source cell to one candidate cell, or perform consecutive handovers from the source cell to multiple candidate cells. In the case of consecutive handovers from the source cell to multiple candidate cells, each candidate cell to which the handover is performed may be considered as having become the source cell for the next handover. For example, UE1 performs consecutive handovers from the source cell, cell#0, to multiple candidate cells, cell#1, cell#2, and cell#3. After performing handover from cell#0 to cell#1, UE1 may perform handover from cell#1 as the source cell to cell#2. After performing handover from cell#1 to cell#2, UE1 may perform handover from cell#2 as the source cell to cell#3.

In the embodiments of the present disclosure, handover conditions may include various scenarios, such as the UE moving from one cell to another, deterioration in the channel quality of the source cell, improvement in the channel quality of the candidate cell, or the candidate cell having better channel quality than the source cell, and the like.

According to the embodiments of the present disclosure, the security update and/or the Layer 2 processing can be flexibly controlled based on scenario information in the handover process. For example, the method guarantees that terminal devices can support consecutive handovers, guarantees service continuity, and reduces signaling overhead caused by frequent security update/Layer 2 processing.

In an embodiment of the present disclosure, the source cell may be a source serving cell. The one or more candidate cells may include a target cell for handover.

In an implementation, the first handover includes at least one of: conditional primary secondary cell (pscell) change, pscell change, subsequent pscell change, L1/L2-triggered mobility (LTM), subsequent primary cell (pcell) handover, subsequent conditional pscell addition or change (SCPAC), conditional secondary cell (scell) change, pscell change, pcell change, or conditional pcell handover.

In an implementation, the security update includes key update. For example, the key update may include a network-side-based key.

In an implementation, the Layer 2 processing includes Layer 2 protocol stack reconstruction.

In an implementation, the Layer 2 protocol stack reconstruction includes Packet Data Convergence Protocol (PDCP) reconstruction, PDCP data recovery, Radio Link Control (RLC) reconstruction, and Media Access Control (MAC) reset.

In an embodiment of the present disclosure, the first scenario information may be scenario information related to the first handover. The first scenario information may also be referred to as a trigger condition, an execution condition, or the like, and may be used to determine whether to perform the security update and/or Layer 2 processing in the case of the first handover.

In an implementation, the first scenario information includes at least one of the following:
performing the security update and/or Layer 2 processing for each handover;
never performing the security update and/or Layer 2 processing;
deployment information of a source cell and/or deployment information of a target cell; or
information indicated by a network.

For example, if the first scenario information includes performing the key update and/or Layer 2 protocol stack reconstruction for each handover, the UE may perform the key update and/or Layer 2 protocol stack reconstruction during each handover (including each handover in consecutive handovers).

For another example, if the first scenario information includes never performing the key update and/or Layer 2 protocol stack reconstruction, the UE may not perform the key update and/or Layer 2 protocol stack reconstruction during each handover (including each handover in consecutive handovers).

For another example, if the first scenario information includes the deployment information of the source cell and/or the deployment information of the target cell, the UE may determine whether to perform the key update and/or Layer 2 protocol stack reconstruction based on the deployment information of the source cell and/or the deployment information of the target cell.

For another example, if the first scenario information includes the information indicated by the network, the UE may determine whether to perform the key update and/or Layer 2 protocol stack reconstruction based on the information indicated by the network.

In an implementation, the deployment information of the source cell and/or the deployment information of the target cell includes at least one of the following:
the deployment information of the source cell is different from the deployment information of the target cell;
the deployment information of the source cell is the same as the deployment information of the target cell; or
the deployment information of the source cell and/or the deployment information of the target cell are unknown.

For example, if the deployment information of the source cell is different from the deployment information of the target cell, the UE may determine that it is necessary to perform the key update and/or Layer 2 protocol stack reconstruction.

For another example, if the deployment information of the source cell and/or the deployment information of the target cell are unknown, the UE may determine that it is necessary to perform the key update and/or Layer 2 protocol stack reconstruction. In this case, the UE may also first request the network side to acquire the deployment information of the source cell and/or the deployment information of the target cell, and then perform the first handover.

For another example, if the deployment information of the source cell is the same as the deployment information of the target cell, the UE may determine that it is not necessary to perform the key update and/or Layer 2 protocol stack reconstruction.

In an implementation, the deployment information of the source cell being different from the deployment information of the target cell includes at least one of the following:
the source cell and the target cell belong to different Secondary Nodes (SNs);
the source cell and the target cell belong to different Centralized Units (CUs); or
the source cell and the target cell belong to different Distributed Units (DUs).

For example, if SN information of the source cell is different from SN information of the target cell, it may indicate that the source cell and the target cell belong to different SNs, or it may indicate that the handover between the source cell and the target cell is an inter-SN handover.

For another example, if CU information of the source cell is different from CU information of the target cell, it may indicate that the source cell and the target cell belong to different CUs, or it may indicate that the handover between the source cell and the target cell is an inter-CU handover.

For another example, if DU information of the source cell is different from DU information of the target cell, it may indicate that the source cell and the target cell belong to different DUs, or it may indicate that the handover between the source cell and the target cell is an inter-DU handover.

In an implementation, the deployment information of the source cell being the same as the deployment information of the target cell includes at least one of the following:
the source cell and the target cell belong to a same SN;
the source cell and the target cell belong to a same CU; or
the source cell and the target cell belong to a same DU.

For example, if SN information of the source cell is the same as SN information of the target cell, it may indicate that the source cell and the target cell belong to the same SN, or it may indicate that the handover between the source cell and the target cell is an intra-SN handover.

For another example, if CU information of the source cell is the same as CU information of the target cell, it may indicate that the source cell and the target cell belong to the same CU, or it may indicate that the handover between the source cell and the target cell is an intra-CU handover.

For another example, if DU information of the source cell is the same as DU information of the target cell, it may indicate that the source cell and the target cell belong to the same DU, or it may indicate that the handover between the source cell and the target cell is an intra-DU handover.

In an implementation, the operation that it is determined whether the deployment information of the source cell is the same as the deployment information of the target cell includes at least one of the following:
whether the source cell and the target cell are configured with at least one of same SN information, same CU information, same DU information, or same group index; or
whether the source cell and the target cell are configured in a same group.

For example, a group index may have a correspondence with the SN information. If the source cell and the target cell are configured with the same group index, it may be determined that the source cell and the target cell are configured in the same group, or it may be determined that the SN information of the source cell is the same as the SN information of the target cell.

For another example, the candidate cells configured by the network include different candidate cell groups, each group has multiple candidate cells, and multiple candidate cells in one group are considered to belong to the same group, same SN, same CU, or same DU. If the source cell and the target cell belong to the same candidate cell group, it may be determined that the source cell and the target cell are configured in the same group.

As another example, the group index may have a correspondence with the CU information. If the source cell and the target cell are configured with the same group index, it may be determined that the source cell and the target cell are configured in the same group, or it may be determined that the CU information of the source cell is the same as the CU information of the target cell.

As another example, the group index may have a correspondence with the DU information. If the source cell and the target cell are configured with the same group index, it may be determined that the source cell and the target cell are configured in the same group, or it may be determined that the DU information of the source cell is the same as the DU information of the target cell.

In an implementation, the deployment information of the source cell and/or the deployment information of the target cell being unknown includes at least one of the following:
an SN to which the source cell belongs is unknown;
an SN to which the target cell belongs is unknown;
a CU to which the source cell belongs is unknown;
a CU to which the target cell belongs is unknown;
a DU to which the source cell belongs is unknown; or
a DU to which the target cell belongs is unknown.

In the embodiments of the present disclosure, if the terminal device cannot determine the deployment information of the source cell and/or the target cell from local pre-configuration information or configuration information from the network, it may be considered that the deployment information is unknown or unclear.

In an implementation, the information indicated by the network includes at least one of the following:
the security update and/or Layer 2 processing explicitly indicated by the network;
a handover type corresponding to the security update and/or Layer 2 processing explicitly indicated by the network; or
one or more handovers for which the security update and/or Layer 2 processing is to be performed, implicitly indicated by the network.

In an embodiment of the present disclosure, the terminal device may receive information indicating whether to perform the security update and/or Layer 2 processing from the network device. The information may explicitly or implicitly indicate whether to perform security update and/or Layer 2 processing.

In some examples, whether to perform the security update and/or Layer 2 processing may be explicitly indicated by bits in the information. One or more bits in the information may be used to indicate the security update and/or Layer 2 processing. One or more bits in the information may be used to indicate the handover type corresponding to the security update and/or Layer 2 processing. For example, in the information, if a bit is 0, it indicates that the handover type is inter-SN handover, and if the bit is 1, it indicates that the handover type is intra-SN handover. For another example, in the information, if one of two bits is 0, it indicates that the handover type is inter-CU handover, and if the bit is 1, it indicates that the handover type is intra-CU handover. If another bit is 0, it indicates that the handover type is inter-DU handover, and if the bit is 1, it indicates that the handover type is intra-DU handover.

FIG. 4 is a schematic flowchart of a communication method 400 according to another embodiment of the present disclosure. The method may include one or more features in the above communication method. In an implementation, the method further includes the following operations.

At S410, the terminal device obtains a candidate cell configuration, where the candidate cell configuration is used to assist the terminal device in performing the first handover.

In an implementation, the candidate cell configuration includes at least one of: deployment information of one or more candidate cells, deployment information of a source cell, or one or more security update parameters.

In an embodiment of the present disclosure, the terminal device may obtain the candidate cell configuration from pre-configuration information, or may receive the candidate cell configuration from the network device. If the candidate cell configuration includes the deployment information of the source cell and the deployment information of one or more candidate cells, it is possible to compare whether the deployment information of the source cell is the same as the deployment information of one or more candidate cells (or the target cell), thereby determining the handover type, or determining whether a security update is to be performed and/or whether a Layer 2 protocol stack reconstruction is to be performed.

In the embodiments of the present disclosure, the security update parameters may be different in different scenarios. For example, in an SN scenario, the security update parameters may include a secondary node key counter (SK counter). In a CU and/or DU scenario, the security update parameters may include a Next Hop Chaining Counter (NCC).

After S410, S310 may be executed, and if it is necessary to perform the security update based on the determination result of S310, S420 described below may be executed.

In an implementation, the method further includes the operation S420.

At S420, the terminal device performs the security update based on the one or more security update parameters.

In an implementation, the operation in S420 that the terminal device performs the security update based on the one or more security update parameters including at least one of the following Method 1 or Method 2.

In Method 1, the terminal device randomly selects one of the one or more security update parameters, and performs the security update. For example, if N (N is greater than 1) SK counters are included in the candidate cell configuration, when the SN information of the source cell is different from the SN information of the target cell, the UE may select one of the N SK counters, and perform key update together with the network key. For another example, if M (M is greater than 1) NCCs are included in the candidate cell configuration, when the CU information of the source cell is different from the CU information of the target cell, the UE may select one of the M NCCs after the handover, and perform key update together with the network key.

In Method 2, the terminal device determines a target security update parameter from the one or more security update parameters in ascending or descending order and performs the security update based on the target security update parameter. For example, if N (N is greater than 1) SK counters are included in the candidate cell configuration, the order is SK1, SK2, and SK3. When the SN information of the source cell is different from the SN information of the target cell, the UE may first use SK1 to perform key update together with the network key after the current handover, may use SK2 to perform key update together with the network key after the next handover, and may use SK3 to perform key update together with the network key after the last handover. For another example, if M (M is greater than 1) NCCs are included in the candidate cell configuration, the order is NCC1, NCC2, and NCC3. When the CU information of the source cell is different from the CU information of the target cell, the UE may first use NCC1 to perform key update together with the network key after the current handover, may use NCC2 to perform key update together with the network key after the next handover, and may use NCC3 to perform key update together with the network key after the last handover.

In an implementation, the operation that performing the security update includes that: a new key for a target cell is generated and/or updated based on the one or more security update parameters and a network key. The new key may be used for encryption and/or integrity protection, and the new key may be one of the inputs to the encryption and/or integrity protection algorithm. For example, the network key may be pre-configured or configured to the terminal device by the network device. After the terminal device acquires one or more security update parameters and the network key, when the terminal device needs to perform the security update, such as key update, the security update parameters and the network key may be input into a preset algorithm to obtain the new key. An exemplary preset algorithm may be a Key Derivation Function (KDF).

In an implementation, the deployment information is SN information, the one or more security update parameters are one or more SN key (SK) counters, and a network key is a Master Node (MN) key.

In an implementation, the deployment information is CU information, the one or more security update parameters are one or more Next Hop Chaining Counters (NCCs), and a network key is an MN key.

In an implementation, a handover type corresponding to performing the security update and/or Layer 2 processing include at least one of: inter-SN handover, inter-CU handover, or inter-DU handover.

In an implementation, the security update and/or Layer 2 processing may not be performed for at least one of the intra-SN handover, the intra-CU handover, or the intra-DU handover.

In an implementation, the handover type is determined based on at least one of the following:
deployment information of a candidate cell;
deployment information of a target cell; or
deployment information of a source cell.

For example, if the SN information of the source cell is different from the SN information of the candidate cell, the handover type may be an inter-SN handover. If the SN information of the source cell is the same as the SN information of the candidate cell, the handover type may be an intra-SN handover. If the SN information of the source cell is different from the SN information of the target cell, the handover type may be an inter-SN handover. If the SN information of the source cell is the same as the SN information of the target cell, the handover type may be an intra-SN handover.

For another example, if the CU information of the source cell is different from the CU information of the candidate cell, the handover type may be an inter-CU handover. If the CU information of the source cell is the same as the CU information of the candidate cell, the handover type may be an intra-CU handover. If the CU information of the source cell is different from the CU information of the target cell, the handover type may be an inter-CU handover. If the CU information of the source cell is the same as the CU information of the target cell, the handover type may be an intra-CU handover.

For another example, if the DU information of the source cell is different from the DU information of the candidate cell, the handover type may be an inter-DU handover. If the DU information of the source cell is the same as the DU information of the candidate cell, the handover type may be an intra-DU handover. If the DU information of the source cell is different from the DU information of the target cell, the handover type may be an inter-DU handover. If the DU information of the source cell is the same as the DU information of the target cell, the handover type may be an intra-DU handover.

In an implementation, at least one of the following applies: the deployment information of the candidate cell is indicated by a candidate cell configuration; the deployment information of the candidate cell is explicitly indicated by an index of deployment information; the deployment information of the candidate cell is explicitly indicated by a group index; or the deployment information of the candidate cell is implicitly indicated by grouping the candidate cells.

In an implementation, the deployment information of the target cell is indicated by at least one of: a candidate cell configuration; or a handover command.

In an implementation, the deployment information of the source cell is indicated by at least one of a candidate cell configuration; or a Radio Resource Control (RRC) reconfiguration message.

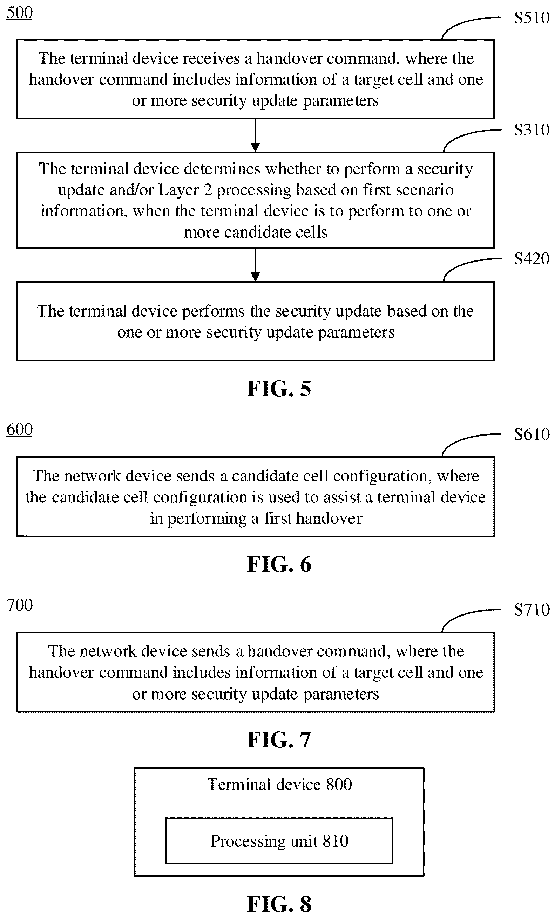

FIG. 5 is a schematic flowchart of a communication method 500 according to another embodiment of the present disclosure. The method may include one or more features in the above communication method. In an implementation, the method further includes operation S510.

At S510, the terminal device receives a handover command, where the handover command includes information of a target cell and one or more security update parameters.

In an implementation, the handover command is carried by an RRC reconfiguration message.

In the embodiment, one or more security update parameters may be carried in the handover command (or referred to as a handover instruction, a handover message, or the like), or may be carried in a candidate cell configuration. After acquiring one or more security update parameters, the UE may perform the security update as needed. For example, after S510, S310 may be executed, and if it is necessary to perform the security update based on the determination result of S310, S420 described below may be executed.

FIG. 6 is a schematic flowchart of a communication method 600 according to an embodiment of the present disclosure. Optionally, the method may be applied to the system illustrated in FIG. 1, but is not limited thereto. The method includes at least some of the following operations.

At S610, the network device sends a candidate cell configuration, where the candidate cell configuration is used to assist a terminal device in performing a first handover.

In an implementation, the candidate cell configuration includes at least one of: deployment information of one or more candidate cells, deployment information of a source cell, or one or more security update parameters.

In an implementation, the deployment information is SN information, the one or more security update parameters are one or more SN key counters, and a network key is a Master Node (MN) key.

In an implementation, the deployment information is CU information, the one or more security update parameters are one or more Next Hop Chaining Counters (NCCs), and a network key is an MN key.

In an implementation, the first handover includes at least one of: conditional primary secondary cell (pscell) change, pscell change, subsequent pscell change, L1/L2-triggered mobility (LTM), subsequent primary cell (pcell) handover, subsequent conditional pscell addition or change (SCPAC), conditional secondary cell (scell) change, pscell change, pcell change, or conditional pcell handover.

FIG. 7 is a schematic flowchart of a communication method 700 according to another embodiment of the present disclosure. The method may include one or more features in the above communication method. In an implementation, the method further includes operation S710.

At S710, the network device sends a handover command, where the handover command includes information of a target cell and one or more security update parameters.

In an implementation, the handover command is carried by an RRC reconfiguration message.

For specific examples in which the network device performs the methods 600 and 700 in the embodiment, reference can be made to the related description of the network device (such as the base station) in the above methods 300, 400 and 500, which will not be repeated here for the sake of brevity.

### Example 1. SCPAC

The network pre-configures one or more candidate cell configurations to the UE, and the candidate cell configurations are used to perform subsequent CPA/CPC procedures. The relationship between the candidate cell and the source serving cell may be inter-secondary node (inter-SN) or intra-secondary node (intra-SN).

The network configures one or more SK counters for updating the key for each candidate cell or each SN, and the UE updates the key based on the one or more SK counters when the UE needs to perform the key update.
1. The UE needs to perform the key update under at least one of the following conditions:
   (1) performing the key update for each handover;
   (2) never performing the key update, for example, the key is not updated by default;
   (3) a source cell (such as a source pscell) and a target cell (such as a target pscell) belong to different SNs, where a method for the UE to determine whether two cells belong to the same SN may include that: it is determined whether the same SN/group index is configured, or whether the two cells are configured in the same group;
   (4) the source pscell and the target pscell belong to the same SN;
   (5) the SN to which the source pscell belongs is unclear;
   (6) the SN to which the target pscell belongs is unclear;
   (7) an explicit indication for key update is received from the network;
   (8) an explicit indication is received from the network, and indicates that the handover is an inter-SN handover;
   (9) an implicit indication is received from the network, and indicates that the key update is needed for the handover, for example, the network indicates PDCP reconstruction and RLC reconstruction.
2. A method for the UE to determine whether the current handover is inter-SN or intra-SN includes at least one of the following:
   (1) For a candidate cell, the candidate cell configuration may include SN indication information, such as SN information of the candidate cell. The indication information may be explicitly indicated by an SN index, a group index, or the like, or may be implicitly indicated by grouping the candidate cells.
   (2) For the target cell, the SN information of the target cell may be carried in a pscell handover command. The pscell handover command may come from the serving cell (or source cell), which may be a serving cell that delivers the candidate cell configuration, or may be a target cell to which a successful handed-over is performed subsequently.
   (3) For the source cell, the SN information of the source cell may be carried in the RRC reconfiguration message.
3. The operation that the key update is performed by the UE based on one or more SK counters includes:
   (1) the UE randomly selects one of one or more pre-configured SK counters and updates the key;
   (2) the UE determines a target SK counter in ascending/descending order among one or more pre-configured SK counters, and updates the key.

The handover includes a conditional pscell change, a pscell change, and a subsequent pscell change, which is not limited by the embodiments of the present disclosure.

### Example 1-1: from CPA to normal pscell change, and to CPC:

If, after performing the CPA, the UE receives a pscell change instruction (where a change target is cell#1) transmitted by the network side during the candidate cell condition evaluation/monitoring process for subsequent CPC. The UE performs the pscell change process based on the instruction, and determines whether to update the key based on the SK counter information indication carried in the pscell change instruction. For example, if the pscell change instruction carries an SK counter, the UE generates/updates the key based on a next Generation Node B key (KgNB key) and the received SK counter. The pscell change instruction may be an RRC reconfiguration message.

After performing the pscell change (to cell#1), if a candidate cell for subsequent CPC meets execution conditions, such as handover conditions, the UE performs the subsequent CPC execution (where a change target is cell#2). At this time, the UE determines whether to update the key based on SN indication information of the candidate cell (i.e., cell#2) that meets the conditions and the SN information of the source serving cell (i.e., cell#1).

The SN indication information of the candidate cell (i.e., cell#2) may be carried in the candidate cell configuration. The SN information of the current source serving cell (i.e., cell#1) may be carried in the pscell change instruction.

If the candidate cell (i.e., cell#2) and the source serving cell (i.e., cell#1) belong to the same SN, the UE does not need to perform the key update process. Otherwise, the UE may generate/update the key based on the KgNB key and the selected SK counter.

Additionally, there is an implicit manner, that is, when the UE receives a network indication to perform handover to cell#1, if the UE does not perform the key update, it indicates that cell#1 and the source cell (i.e., cell#0) have an intra-SN relationship. When the UE performs handover to cell#2 via CPC, the UE only needs to compare whether cell#2 and cell#0 (which is a cell before the handover to cell#1) belong to the same SN. When the UE receives a network indication to perform handover to cell#1, if the key update is performed, the UE always performs the key update when performing handover to cell#2.

### Example 1-2: from source pscell to CPC:

The UE receives multiple candidate cell configurations for subsequent conditional pscell change (SCPC) and performs candidate cell evaluation/monitoring based on conditions configured by the network. When a candidate cell meets the conditions, the UE performs a CPC execution process. The UE determines whether to update the key based on SN indication information of the candidate cell that meets the conditions and the SN information of the source serving cell.

The SN indication information of the candidate cell may be carried in the candidate cell configuration. The SN information of the current source serving cell may be included in the candidate cell configuration, or explicitly signaled to the UE (e.g., via RRC or MAC Control Element (MAC CE)), or carried in the source cell configuration (e.g., in an RRC reconfiguration message).

If the candidate cell and the source serving cell belong to the same SN, the UE does not need to perform the key update process. Otherwise, the UE generates/updates the key based on the KgNB key and the selected SK counter.

Optionally, in this case, if the SN information of the source cell is not indicated, the UE is to perform the key update by default.

Optionally, if the SN information of the source cell is not indicated, the UE may request to acquire SN information from the source cell before executing CPC, such as by an RRC message or an uplink MAC CE.

Optionally, the UE determines whether the source cell is included in a candidate cell list. If included, the UE determines whether to perform a key update based on the SN information of the candidate cell corresponding to the source cell. Optionally, when configuring SCPAC candidate configurations for the UE, the network may include indication information to inform the UE whether the source cell is configured as a candidate cell and/or a corresponding candidate cell index.

### Example 2: LTM

The network pre-configures one or more candidate cell configurations for the UE, the candidate cell configurations are used for the UE to execute subsequent LTM processes. The relationship between the candidate cell and the source serving cell may be inter-CU or intra-CU, and inter-DU or intra-DU.

LTM includes network-triggered LTM and UE-triggered LTM. Network-triggered LTM refers to that the UE performs a handover process based on an LTM cell switch command delivered by the network. The UE-triggered LTM refers to that the UE triggers a handover process based on pre-configured conditions.

The network configures one or more NCCs for key update for each candidate cell or each CU. The UE updates the key based on the one or more NCCs when a key update is required.
1. The UE needs to perform the key update under at least one of the following conditions:
   (1) performing the key update for each handover;
   (2) never performing the key update, for example, the key is not updated by default;
   (3) a source cell (such as a source pcell) and a target cell (such as a target pcell) belong to different CUs. The UE may determine whether the two cells belong to the same CU by determining whether the same CU/group index is configured or whether the two cells are configured in the same group.
   (4) the source pcell and the target pcell belong to the same CU;
   (5) the CU to which the source pcell belongs is unclear;
   (6) the CU to which the target pcell belongs is unclear;
   (7) an explicit indication for key update is received from the network, such as indicating the UE to update the key, indicating a new NCC, or indicating whether the UE uses the NCC to perform key update, which means indicating the UE to perform either a horizontal key update or a vertical key update;
   (8) an explicit indication is received from the network, and indicates that the handover is an inter-CU handover;
   (9) an implicit indication is received from the network, and indicates that the key update is needed for the handover, for example, the network indicates PDCP reconstruction, RLC reconstruction, MAC reset.
2. A method for the UE to determine whether the current handover is inter-CU or intra-CU includes at least one of the following:
   (1) For a candidate cell, the candidate cell configuration may include CU indication information. The indication information may be an explicit CU index, or indicated via a group index, or implicitly indicated by grouping the candidate cells.
   (2) For the target cell, CU information may be carried in the pcell handover instruction;
   (3) For the source cell, the CU information may be carried in the RRC reconfiguration message.
3. The operation that the UE performs key update based on one or more NCCs includes:
   (1) the UE randomly selects one of one or more pre-configured NCC and updates the key;
   (2) the UE determines a target NCC in ascending/descending order among one or more pre-configured NCC, and updates the key;
   (3) The UE performs key update based on the NCC indicated in the handover command.

The handover may include conditional pcell change, traditional pcell change, and subsequent pcell change, etc., which are not limited by the embodiments of the present disclosure.

### Example 2-1: from LTM to traditional pcell change, and to LTM

If, after performing the LTM, the UE receives a pcell change (to cell#1) handover command from the network side during the candidate cell condition evaluation/monitoring process for subsequent LTM. The UE performs the pcell change handover process based on the command and determines whether to update the key according to the NCC information carried in the pcell change handover command. For example, if the pcell change handover command carries the NCC information, the UE generates/updates the key based on the KgNB key and the received NCC information. The pscell change handover command may be an RRC reconfiguration message.

After performing the pcell change (to cell#1), if a candidate cell for subsequent LTM meets execution conditions, the UE performs subsequent LTM execution (to cell#2). At this time, the UE determines whether to update the key based on the CU indication information of the candidate cell (i.e., cell#2) that meets the conditions and the CU information of the source serving cell (i.e., cell#1).

The CU indication information of the candidate cell (i.e., cell#2) is carried in the candidate cell configuration. The CU information of the current source serving cell (i.e., cell#1) may be carried in the pcell change handover command.

If the candidate cell (i.e., cell#2) and the source serving cell (i.e., cell#1) belong to the same CU, the UE does not need to perform the key update process. Otherwise, the UE generates/updates the key based on the KgNB key and the selected NCC.

### Example 2-2: from source pscell to LTM:

The UE receives multiple candidate cell configurations for LTM and performs candidate cell evaluation/monitoring/measurement reporting based on conditions or measurement configurations configured by the network. When a candidate cell meets the conditions, the UE performs an LTM execution process. The UE determines whether to update the key based on CU indication information of the candidate cell that meets the conditions and the CU information of the source serving cell.

The CU indication information of the candidate cell is carried in the candidate cell configuration. The CU information of the current source serving cell may be carried in the candidate cell configuration, or explicit signaled to the UE (via RRC or MAC CE), or carried in the source cell configuration (i.e., in an RRC reconfiguration message).

If the candidate cell and the source serving cell belong to the same CU, the UE does not need to perform the key update process. Otherwise, the UE generates/updates the key based on the KgNB key and the selected NCC.

Optionally, in this case, if the CU information of the source cell is not indicated, the UE is to perform the key update by default.

Optionally, if the CU information of the source cell is not indicated, the UE may request to acquire CU information from the source cell before executing LTM, such as by an RRC message or an uplink MAC CE.

Optionally, if the LTM is an LTM triggered by a network (NW), the network side may carry NCC or CU information in the LTM cell switch command for the UE to update the key.

### Example 3: L2 reset, or L2 protocol stack reconstruction

Example 1 and Example 2 mainly include key update in handover scenarios. In addition to key update, during handover scenarios, the UE may need to perform an L2 protocol stack reconstruction, such as PDCP reconstruction, PDCP data recovery, RLC reconstruction, MAC reset, etc.
1. For inter-CU handover, since the key needs to be updated, PDCP reconstruction is also required.
2. For intra-CU and inter-DU handover, since the key does not need to be updated, PDCP reconstruction is not required. However, PDCP data recovery, RLC reconstruction, and MAC reset are necessary to ensure service continuity.
3. For intra-CU and intra-DU handover, if the configurations of the source cell and target cell remain unchanged, PDCP reconstruction and RLC reconstruction are not performed, and a full MAC reset may not be necessary, instead requiring only a partial MAC reset.

To support different L2 processing in the above scenarios, candidate cell configurations may carry CU and/or DU indication information. However, for some special scenarios, such as when the CU information and/or DU information of the source cell is unknown, and the CU information and/or DU information of the target cell of the conventional handover is unknown (see specific processing methods in Example 1 and/or Example 2).

4. The UE may perform an L2 reset when at least one of the following conditions is met:
(1) performing L2 reset for each handover;
(2) never performing L2 reset, for example, L2 reset is not performed by default;
(3) a source cell (such as a source pcell) and a target cell (such as a target pcell) belong to different CUs/DUs. The UE may determine whether the two cells belong to the same CU/DU by determining whether the same CU/DU/group index is configured or whether the two cells are configured in the same group.
(4) the source pcell and the target pcell belong to the same CU/DU;
(5) the CU/DU to which the source pcell belongs is unclear;
(6) the CU/DU to which the target pcell belongs is unclear;
(8) an explicit indication is received from the network, and indicates that L2 reset is performed;
(9) an explicit indication is received from the network, and indicates that the handover is an inter-CU/DU handover;
   an implicit indication is received from the network, and indicates that L2 reset is needed for the handover, for example, the network indicates PDCP reconstruction, RLC reconstruction, MAC reset (or partial MAC reset), or the like.

According to the solution provided in the embodiments of the present disclosure, if the scenario information (such as key update) is unclear in the process of performing conditional handover, normal handover, or the like by the UE, it is also possible to perform operations such as key update and/or Layer 2 protocol stack reconstruction.

FIG. 8 is a schematic block diagram of a terminal device 800 according to an embodiment of the present disclosure. The terminal device 800 may include a processing unit 810.

The processing unit 810 is configured to determine whether to perform a security update and/or Layer 2 processing based on first scenario information, when the terminal device is to perform a first handover to one or more candidate cells.

In an implementation, the security update includes key update.

In an implementation, the Layer 2 processing includes Layer 2 protocol stack reconstruction, and the Layer 2 protocol stack reconstruction includes Packet Data Convergence Protocol (PDCP) reconstruction, PDCP data recovery, Radio Link Control (RLC) reconstruction, and Media Access Control (MAC) reset.

In an implementation, the first scenario information includes at least one of the following:
performing the security update and/or Layer 2 processing for each handover;
never performing the security update and/or Layer 2 processing;
deployment information of a source cell and/or deployment information of a target cell; or
information indicated by a network.

In an implementation, the deployment information of the source cell and/or the deployment information of the target cell includes at least one of the following:
the deployment information of the source cell is different from the deployment information of the target cell;
the deployment information of the source cell is the same as the deployment information of the target cell; or
the deployment information of the source cell and/or the deployment information of the target cell are unknown.

In an implementation, the deployment information of the source cell being different from the deployment information of the target cell includes at least one of the following:
the source cell and the target cell belong to different Secondary Nodes (SNs);
the source cell and the target cell belong to different Centralized Units (CUs); or
the source cell and the target cell belong to different Distributed Units (DUs).

In an implementation, the deployment information of the source cell being the same as the deployment information of the target cell includes at least one of the following:
the source cell and the target cell belong to a same SN;
the source cell and the target cell belong to a same CU; or
the source cell and the target cell belong to a same DU.

In an implementation, determining whether the deployment information of the source cell is the same as the deployment information of the target cell includes at least one of the following:
whether the source cell and the target cell are configured with at least one of same SN information, same CU information, same DU information, or same group index; or
whether the source cell and the target cell are configured in a same group.

In an implementation, the deployment information of the source cell and/or the deployment information of the target cell being unknown includes at least one of the following:
an SN to which the source cell belongs is unknown;
an SN to which the target cell belongs is unknown;
a CU to which the source cell belongs is unknown;
a CU to which the target cell belongs is unknown;
a DU to which the source cell belongs is unknown; or
a DU to which the target cell belongs is unknown.

In an implementation, the information indicated by the network includes at least one of the following:
the security update and/or Layer 2 processing explicitly indicated by the network;
a handover type corresponding to the security update and/or Layer 2 processing explicitly indicated by the network; or
one or more handovers for which the security update and/or Layer 2 processing is to be performed, implicitly indicated by the network.

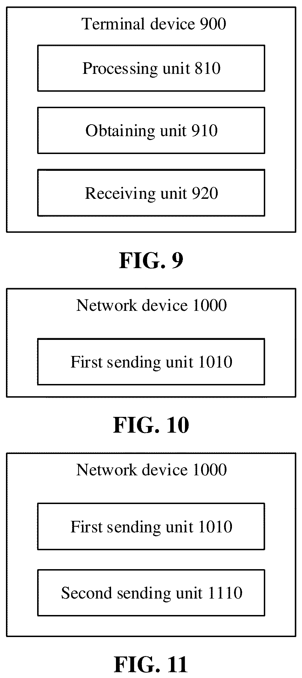

FIG. 9 is a schematic block diagram of a terminal device 900 according to another embodiment of the present disclosure. In an implementation, the device further includes an obtaining unit 910.

The obtaining unit is configured to obtain a candidate cell configuration, where the candidate cell configuration is used to assist the terminal device in performing the first handover.

In an implementation, the candidate cell configuration includes at least one of: deployment information of one or more candidate cells, deployment information of a source cell, or one or more security update parameters.

In an implementation, the processing unit 810 is configured to perform the security update based on the one or more security update parameters.

In an implementation, the processing unit 810 is configured to: select randomly one of the one or more security update parameters and perform the security update; determine a target security update parameter from the one or more security update parameters in ascending or descending order and perform the security update based on the target security update parameter.

In an implementation, performing the security update includes: generating and/or updating a new key for a target cell based on the one or more security update parameters and a network key.

In an implementation, the deployment information is SN information, the one or more security update parameters are one or more SN key counters, and a network key is a Master Node (MN) key.

In an implementation, the deployment information is CU information, the one or more security update parameters are one or more Next Hop Chaining Counters (NCCs), and a network key is an MN key.

In an implementation, the first handover includes at least one of: conditional primary secondary cell (pscell) change, pscell change, subsequent pscell change, L1/L2-triggered mobility (LTM), subsequent primary cell (pcell) handover, subsequent conditional pscell addition or change (SCPAC), conditional secondary cell (scell) change, pscell change, pcell change, or conditional pcell handover.

In an implementation, a handover type corresponding to performing the security update and/or Layer 2 processing include at least one of: inter-SN handover, inter-CU handover, or inter-DU handover.

In an implementation, the handover type is determined based on at least one of the following:
deployment information of a candidate cell;
deployment information of a target cell; or
deployment information of a source cell.

In an implementation, at least one of the following applies:
the deployment information of the candidate cell is indicated by a candidate cell configuration;
the deployment information of the candidate cell is explicitly indicated by an index of deployment information;
the deployment information of the candidate cell is explicitly indicated by a group index; or
the deployment information of the candidate cell is implicitly indicated by grouping the candidate cells.

In an implementation, the deployment information of the target cell is indicated by at least one of the following:
a candidate cell configuration; or
a handover command.

In an implementation, the deployment information of the source cell is indicated by at least one of the following:
a candidate cell configuration; or
a Radio Resource Control (RRC) reconfiguration message.

In an implementation, as illustrated in FIG. 9, the device further includes a receiving unit 920.

The receiving unit 920 is configured to receive a handover command, where the handover command includes information of a target cell and one or more security update parameters.

In an implementation, the handover command is carried by an RRC reconfiguration message.

The terminal devices 800 and 900 in the embodiments of the present disclosure can realize the corresponding functions of the terminal device in the aforementioned method embodiments. The processes, functions, implementations, and beneficial effects corresponding to each module (sub-module, unit, component, etc.) in the terminal devices 800 and 900 can refer to the corresponding description in the aforementioned method embodiments, which will not be repeated here. It is necessary to explain that, the functions described with respect to the respective modules (sub-modules, units or components, etc.) in the terminal devices 800 and 900 of the embodiments of the present disclosure can be realized by different modules (sub-module, unit or component, etc.) or by the same module (sub-module, unit or component, etc.).

FIG. 10 is a schematic block diagram of a network device 1000 according to an embodiment of the present disclosure. The network device 1000 may include a first sending unit 1010.

The first sending unit 1010 is configured to send a candidate cell configuration, where the candidate cell configuration is used to assist a terminal device in performing a first handover.

In an implementation, the candidate cell configuration includes at least one of: deployment information of one or more candidate cells, deployment information of a source cell, or one or more security update parameters.

In an implementation, the deployment information is SN information, the one or more security update parameters are one or more SN key counters, and a network key is a Master Node (MN) key.

In an implementation, the deployment information is CU information, the one or more security update parameters are one or more Next Hop Chaining Counters (NCCs), and a network key is an MN key.

In an implementation, the first handover includes at least one of: conditional primary secondary cell (pscell) change, pscell change, subsequent pscell change, L1/L2-triggered mobility (LTM), subsequent primary cell (pcell) handover, subsequent conditional pscell addition or change (SCPAC), conditional secondary cell (scell) change, pscell change, pcell change, or conditional pcell handover.

FIG. 11 is a schematic block diagram of a network device 1100 according to another embodiment of the present disclosure. In an implementation, the device further includes a second sending unit 1110.

The second sending unit 1110 is configured to send a handover command, where the handover command includes information of a target cell and one or more security update parameters.

In an implementation, the handover command is carried by an RRC reconfiguration message.

The network devices 1000 and 1100 in the embodiments of the present disclosure can realize the corresponding functions of the network device in the aforementioned method embodiments. The processes, functions, implementations, and beneficial effects corresponding to each module (sub-module, unit, component, etc.) in the network devices 1000 and 1100 can refer to the corresponding description in the aforementioned method embodiments, which will not be repeated here. It is necessary to explain that, the functions described with respect to the respective modules (sub-modules, units or components, etc.) in the network devices 1000 and 1100 of the embodiments of the present disclosure can be realized by different modules (sub-module, unit or component, etc.) or by the same module (sub-module, unit or component, etc.).

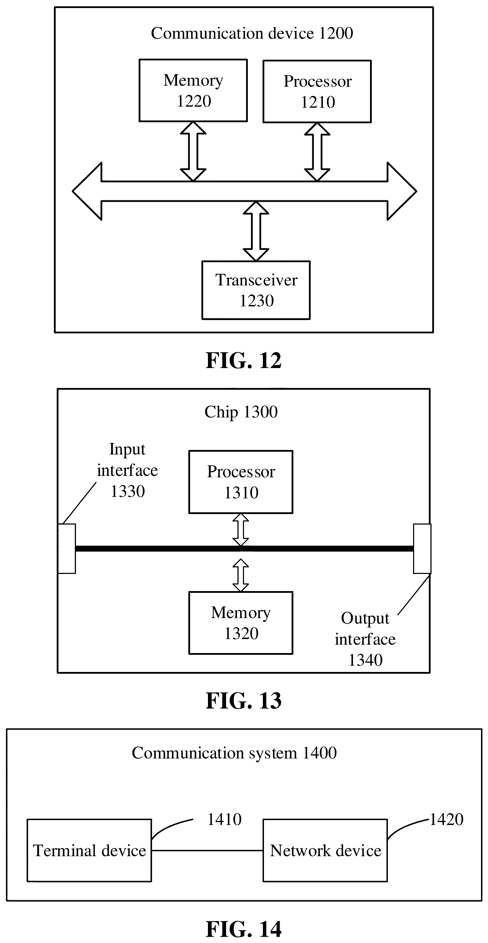

FIG. 12 is a schematic structural diagram of a communication device 1200 according to an embodiment of the present disclosure. The communication device 1200 includes a processor 1210 that may call and execute a computer program from a memory to cause the communication device 1200 to implement the method in the embodiments of the present disclosure.

In an implementation, the communication device 1200 may also include a memory 1220. The processor 1210 may call and execute a computer program from the memory 1220 to cause the communication device 1200 to implement the method in the embodiments of the present disclosure.

The memory 1220 may be a separate device independent of the processor 1210 or may be integrated in the processor 1210.

In an implementation, the communication device 1200 may also include a transceiver 1230. The processor 1210 may control the transceiver 1230 to communicate with other devices, and in particular to send information or data to other devices, or receive information or data from other devices.

The transceiver 1230 may include a transmitter and a receiver. The transceiver 1230 may further include antennas. The number of antennas may be one or more.

In an implementation, the communication device 1200 may be a network device of the embodiments of the present disclosure, and the communication device 1200 may implement corresponding processes implemented by the network device in respective methods of the embodiments of the present disclosure, which will not be repeated here for the sake of brevity.

In an implementation, the communication device 1200 may be a terminal device of the embodiments of the present disclosure, and the communication device 1200 may implement corresponding processes implemented by the terminal device in respective methods of the embodiment of the present disclosure, which will not be repeated here for the sake of brevity.

FIG. 13 is a schematic structural diagram of a chip 1300 according to an embodiment of the present disclosure. The chip 1300 includes a processor 1310, which may call and execute a computer program from a memory to implement the method in the embodiments of the present disclosure.

In an implementation, the chip 1300 may also include a memory 1320. The processor 1310 may call and execute a computer program from the memory 1320 to implement the method executed by the terminal device or the network device in the embodiments of the present disclosure.

The memory 1320 may be a separate device independent of the processor 1310 or may be integrated in the processor 1310.

In an implementation, the chip 1300 may also include an input interface 1330. The processor 1310 may control the input interface 1330 to communicate with other devices or chips, and in particular to obtain information or data from other devices or chips.

In an implementation, the chip 1300 may also include an output interface 1340. The processor 1310 may control the output interface 1340 to communicate with other devices or chips, and in particular to output information or data to other devices or chips.

In an implementation, the chip may be applied to be the network device of the embodiments of the present disclosure, and the chip may implement corresponding processes implemented by the network device in various methods of the embodiments of the present disclosure, which will not be repeated here for the sake of brevity.

In an implementation, the chip may be applied to be a terminal device of the embodiments of the present disclosure, and the chip may implement corresponding processes implemented by the terminal device in various methods of the embodiments of the present disclosure, which will not be repeated here for the sake of brevity.

The chip applied to the network device may be the same as or different from the chip applied to the terminal device.

It is to be understood that the chip mentioned in the embodiments of the present disclosure may also be referred to as a system-level chip, a system chip, a chip system or a system-on-chip or the like.

The processor mentioned above may be a general purpose processor, a digital signal processor (DSP), a field programmable gate array (FPGA), an application specific integrated circuit (ASIC), or other programmable logic devices, transistor logic devices, discrete hardware components, and the like. The general purpose processor mentioned above may be a microprocessor or any conventional processor or the like.

The memory mentioned above may be a volatile memory or a non-volatile memory or may include both a volatile memory and a non-volatile memory. The non-volatile memory may be read-only memory (ROM), programmable ROM (PROM), erasable PROM (EPROM), electrically EPROM (EPROM) or flash memory. The volatile memory may be a random access memory (RAM).

It is to be understood that the memory described above is exemplary but not limited, for example, the memory in embodiments of the present disclosure may also be static RAM (SRAM), dynamic RAM (DRAM), synchronous DRAM (SDRAM), double data rate SDRAM (DDR SDRAM), enhanced SDRAM (ESDRAM), synchronous link DRAM (SLDRAM), direct rambus RAM (DR RAM), etc. That is, the memory in the embodiments of the present disclosure is intended to include, but is not limited to, these memories and any other suitable types of memory.

FIG. 14 is a schematic block diagram of a communication system 1400 according to an embodiment of the present disclosure. The communication system 1400 includes a terminal device 1410 and a network device 1420.

The terminal device 1410 is configured to determine whether to perform a security update and/or Layer 2 processing based on first scenario information, when the terminal device is to perform a first handover to one or more candidate cells.

The network device 1420 is configured to send a candidate cell configuration, where the candidate cell configuration is used to assist a terminal device in performing a first handover.

The terminal device 1410 may be configured to implement corresponding functions implemented by the terminal device in the aforementioned method, and the network device 1420 may be configured to implement corresponding functions implemented by the network device in the aforementioned method, which will not be repeated here for the sake of brevity.

The aforementioned embodiments may be implemented in whole or in part by software, hardware, firmware or any combination thereof. When implemented in software, they can be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general purpose computer, a special purpose computer, a computer network, or other programmable device. The computer instructions may be stored in a computer-readable storage medium, or transmitted from one computer-readable storage medium to another. For example, the computer instructions may be transmitted from a web site, computer, server, or data center to another web site, computer, server, or data center via wired (e.g. coaxial cable, optical fiber, digital subscriber line (DSL)) or wireless (e.g. infrared, wireless, microwave, etc.). The computer-readable storage medium may be any usable medium accessible to a computer or a data storage device containing one or more usable medium integration, such as a server or a data center. The usable medium may be a magnetic medium (e.g. floppy disk, hard disk, magnetic tape), optical medium (e.g. DVD), or semiconductor medium (e.g. solid state disk (SSD)), etc.

It is to be understood that in various embodiments of the present disclosure, the numerical order of the sequence numbers of the above-mentioned processes does not mean the order of execution, and the execution order of each process is to be determined by its function and inherent logic, and should not constitute any limitation on the implementation process of the embodiments of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated herein.

The above descriptions are only the specific implementations of the present disclosure, but the scope of protection of the present disclosure is not limited thereto. Variations or replacements which can be readily conceived by those skilled in the art within the technical scope disclosed by the disclosure shall fall within the scope of protection of the disclosure. Therefore, the scope of protection of the application shall be subject to the scope of protection of the claim.

## Claims

1. A communication method, comprising:
determining, by a terminal device, whether to perform a security update and/or Layer 2 processing based on first scenario information, when the terminal device is to perform a first handover to one or more candidate cells.

2. The method of claim 1, wherein the security update comprises key update.

3. The method of claim 2, wherein the Layer 2 processing comprises Layer 2 protocol stack reconstruction, and the Layer 2 protocol stack reconstruction comprises Packet Data Convergence Protocol (PDCP) reconstruction, PDCP data recovery, Radio Link Control (RLC) reconstruction, and Media Access Control (MAC) reset.

4. The method of any one of claims 1 to 3, wherein the first scenario information comprises at least one of the following:
performing the security update and/or Layer 2 processing for each handover;
never performing the security update and/or Layer 2 processing;
deployment information of a source cell and/or deployment information of a target cell; or
information indicated by a network.

5. The method of claim 4, wherein the deployment information of the source cell and/or the deployment information of the target cell comprises at least one of the following:
the deployment information of the source cell is different from the deployment information of the target cell;
the deployment information of the source cell is the same as the deployment information of the target cell; or
the deployment information of the source cell and/or the deployment information of the target cell are unknown.

6. The method of claim 5, wherein the deployment information of the source cell being different from the deployment information of the target cell comprises at least one of the following:
the source cell and the target cell belong to different Secondary Nodes (SNs);
the source cell and the target cell belong to different Centralized Units (CUs); or
the source cell and the target cell belong to different Distributed Units (DUs).

7. The method of claim 5 or 6, wherein the deployment information of the source cell being the same as the deployment information of the target cell comprises at least one of the following:
the source cell and the target cell belong to a same SN;
the source cell and the target cell belong to a same CU; or
the source cell and the target cell belong to a same DU.

8. The method of any one of claims 5 to 7, wherein determining whether the deployment information of the source cell is the same as the deployment information of the target cell comprises at least one of the following:
whether the source cell and the target cell are configured with at least one of same SN information, same CU information, same DU information, or same group index; or
whether the source cell and the target cell are configured in a same group.

9. The method of any one of claims 5 to 8, wherein the deployment information of the source cell and/or the deployment information of the target cell being unknown comprises at least one of the following:
an SN to which the source cell belongs is unknown;
an SN to which the target cell belongs is unknown;
a CU to which the source cell belongs is unknown;
a CU to which the target cell belongs is unknown;
a DU to which the source cell belongs is unknown; or
a DU to which the target cell belongs is unknown.

10. The method of any one of claims 4 to 9, wherein the information indicated by the network comprises at least one of the following:
the security update and/or Layer 2 processing explicitly indicated by the network;
a handover type corresponding to the security update and/or Layer 2 processing explicitly indicated by the network; or
one or more handovers for which the security update and/or Layer 2 processing is to be performed, implicitly indicated by the network.

11. The method of any one of claims 1 to 10, further comprising:
obtaining, by the terminal device, a candidate cell configuration, wherein the candidate cell configuration is used to assist the terminal device in performing the first handover.

12. The method of claim 11, wherein the candidate cell configuration comprises at least one of: deployment information of one or more candidate cells, deployment information of a source cell, or one or more security update parameters.

13. The method of claim 12, further comprising:
performing, by the terminal device, the security update based on the one or more security update parameters.

14. The method of claim 13, wherein performing, by the terminal device, the security update based on the one or more security update parameters comprises at least one of the following:
selecting randomly, by the terminal device, one of the one or more security update parameters, and performing the security update; or
determining, by the terminal device, a target security update parameter from the one or more security update parameters in ascending or descending order, and performing the security update based on the target security update parameter.

15. The method of claim 13 or 14, wherein performing the security update comprises:
generating and/or updating a new key for a target cell based on the one or more security update parameters and a network key.

16. The method of any one of claims 12 to 15, wherein the deployment information is SN information, the one or more security update parameters are one or more SN key counters, and a network key is a Master Node (MN) key.

17. The method of any one of claims 12 to 15, wherein the deployment information is CU information, the one or more security update parameters are one or more Next Hop Chaining Counters (NCCs), and a network key is an MN key.

18. The method of any one of claims 1 to 17, wherein the first handover comprises at least one of: conditional primary secondary cell (pscell) change, pscell change, subsequent pscell change, L1/L2-triggered mobility (LTM), subsequent primary cell (pcell) handover, subsequent conditional pscell addition or change (SCPAC), conditional secondary cell (scell) change, pscell change, pcell change, or conditional pcell handover.

19. The method of any one of claims 1 to 18, wherein a handover type corresponding to performing the security update and/or Layer 2 processing comprise at least one of: inter-SN handover, inter-CU handover, or inter-DU handover.

20. The method of claim 19, wherein the handover type is determined based on at least one of the following:
deployment information of a candidate cell;
deployment information of a target cell; or
deployment information of a source cell.

21. The method of claim 20, wherein at least one of the following applies:
the deployment information of the candidate cell is indicated by a candidate cell configuration;
the deployment information of the candidate cell is explicitly indicated by an index of deployment information;
the deployment information of the candidate cell is explicitly indicated by a group index; or
the deployment information of the candidate cell is implicitly indicated by grouping the candidate cells.

22. The method of claim 20 or 21, wherein the deployment information of the target cell is indicated by at least one of the following:
a candidate cell configuration; or
a handover command.

23. The method of any one of claims 20 to 22, wherein the deployment information of the source cell is indicated by at least one of the following:
a candidate cell configuration; or
a Radio Resource Control (RRC) reconfiguration message.

24. The method of any one of claims 1 to 23, further comprising:
receiving, by the terminal device, a handover command, wherein the handover command comprises information of a target cell and one or more security update parameters.

25. The method of claim 24, wherein the handover command is carried by an RRC reconfiguration message.

26. A communication method, comprising:
sending, by a network device, a candidate cell configuration, wherein the candidate cell configuration is used to assist a terminal device in performing a first handover.

27. The method of claim 26, wherein the candidate cell configuration comprises at least one of: deployment information of one or more candidate cells, deployment information of a source cell, or one or more security update parameters.

28. The method of claim 27, wherein the deployment information is Secondary Node (SN) information, the one or more security update parameters are one or more SN key counters, and a network key is a Master Node (MN) key.

29. The method of claim 27, wherein the deployment information is Centralized Unit (CU) information, the one or more security update parameters are one or more Next Hop Chaining Counters (NCCs), and a network key is an MN key.

30. The method of any one of claims 26 to 29, wherein the first handover comprises at least one of: conditional primary secondary cell (pscell) change, pscell change, subsequent pscell change, L1/L2-triggered mobility (LTM), subsequent primary cell (pcell) handover, subsequent conditional pscell addition or change (SCPAC), conditional secondary cell (scell) change, pscell change, pcell change, or conditional pcell handover.

31. The method of any one of claims 26 to 30, further comprising:
sending, by the network device, a handover command, wherein the handover command comprises information of a target cell and one or more security update parameters.

32. The method of claim 24, wherein the handover command is carried by a Radio Resource Control (RRC) reconfiguration message.

33. A terminal device, comprising:
a processing unit, configured to determine whether to perform a security update and/or Layer 2 processing based on first scenario information, when the terminal device is to perform a first handover to one or more candidate cells.

34. The terminal device of claim 33, wherein the security update comprises key update.

35. The terminal device of claim 34, wherein the Layer 2 processing comprises Layer 2 protocol stack reconstruction, and the Layer 2 protocol stack reconstruction comprises Packet Data Convergence Protocol (PDCP) reconstruction, PDCP data recovery, Radio Link Control (RLC) reconstruction, and Media Access Control (MAC) reset.

36. The terminal device of any one of claims 33 to 35, wherein the first scenario information comprises at least one of the following:
performing the security update and/or Layer 2 processing for each handover;
never performing the security update and/or Layer 2 processing;
deployment information of a source cell and/or deployment information of a target cell; or
information indicated by a network.

37. The terminal device of claim 36, wherein the deployment information of the source cell and/or the deployment information of the target cell comprises at least one of the following:
the deployment information of the source cell is different from the deployment information of the target cell;
the deployment information of the source cell is the same as the deployment information of the target cell; or
the deployment information of the source cell and/or the deployment information of the target cell are unknown.

38. The terminal device of claim 37, wherein the deployment information of the source cell being different from the deployment information of the target cell comprises at least one of the following:
the source cell and the target cell belong to different Secondary Nodes (SNs);
the source cell and the target cell belong to different Centralized Units (CUs); or
the source cell and the target cell belong to different Distributed Units (DUs).

39. The terminal device of claim 37 or 38, wherein the deployment information of the source cell being the same as the deployment information of the target cell comprises at least one of the following:
the source cell and the target cell belong to a same SN;
the source cell and the target cell belong to a same CU; or
the source cell and the target cell belong to a same DU.

40. The terminal device of any one of claims 37 to 39, wherein determining whether the deployment information of the source cell is the same as the deployment information of the target cell comprises at least one of the following:
whether the source cell and the target cell are configured with at least one of same SN information, same CU information, same DU information, or same group index; or
whether the source cell and the target cell are configured in a same group.

41. The terminal device of any one of claims 37 to 40, wherein the deployment information of the source cell and/or the deployment information of the target cell being unknown comprises at least one of the following:
an SN to which the source cell belongs is unknown;
an SN to which the target cell belongs is unknown;
a CU to which the source cell belongs is unknown;
a CU to which the target cell belongs is unknown;
a DU to which the source cell belongs is unknown; or
a DU to which the target cell belongs is unknown.

42. The terminal device of any one of claims 36 to 41, wherein the information indicated by the network comprises at least one of the following:
the security update and/or Layer 2 processing explicitly indicated by the network;
a handover type corresponding to the security update and/or Layer 2 processing explicitly indicated by the network; or
one or more handovers for which the security update and/or Layer 2 processing is to be performed, implicitly indicated by the network.

43. The terminal device of any one of claims 33 to 42, further comprising:
an obtaining unit, configured to obtain a candidate cell configuration, wherein the candidate cell configuration is used to assist the terminal device in performing the first handover.

44. The terminal device of claim 43, wherein the candidate cell configuration comprises at least one of: deployment information of one or more candidate cells, deployment information of a source cell, or one or more security update parameters.

45. The terminal device of claim 44, wherein the processing unit is configured to perform the security update based on the one or more security update parameters.

46. The terminal device of claim 45, wherein the processing unit is configured to: select randomly one of the one or more security update parameters and perform the security update; determine a target security update parameter from the one or more security update parameters in ascending or descending order and perform the security update based on the target security update parameter.

47. The terminal device of claim 45 or 46, wherein the processing unit performing the security update comprises: generating and/or updating a new key for a target cell based on the one or more security update parameters and a network key.

48. The terminal device of any one of claims 44 to 47, wherein the deployment information is SN information, the one or more security update parameters are one or more SN key counters, and a network key is a Master Node (MN) key.

49. The terminal device of any one of claims 44 to 47, wherein the deployment information is CU information, the one or more security update parameters are one or more Next Hop Chaining Counters (NCCs), and a network key is an MN key.

50. The terminal device of any one of claims 33 to 49, wherein the first handover comprises at least one of: conditional primary secondary cell (pscell) change, pscell change, subsequent pscell change, L1/L2-triggered mobility (LTM), subsequent primary cell (pcell) handover, subsequent conditional pscell addition or change (SCPAC), conditional secondary cell (scell) change, pscell change, pcell change, or conditional pcell handover.

51. The terminal device of any one of claims 33 to 50, wherein a handover type corresponding to performing the security update and/or Layer 2 processing comprise at least one of: inter-SN handover, inter-CU handover, or inter-DU handover.

52. The terminal device of claim 51, wherein the handover type is determined based on at least one of the following:
deployment information of a candidate cell;
deployment information of a target cell; or
deployment information of a source cell.

53. The terminal device of claim 52, wherein at least one of the following applies:
the deployment information of the candidate cell is indicated by a candidate cell configuration;
the deployment information of the candidate cell is explicitly indicated by an index of deployment information;
the deployment information of the candidate cell is explicitly indicated by a group index; or
the deployment information of the candidate cell is implicitly indicated by grouping the candidate cells.

54. The terminal device of claim 52 or 53, wherein the deployment information of the target cell is indicated by at least one of the following:
a candidate cell configuration; or
a handover command.

55. The terminal device of any one of claims 52 to 54, wherein the deployment information of the source cell is indicated by at least one of the following:
a candidate cell configuration; or
a Radio Resource Control (RRC) reconfiguration message.

56. The terminal device of any one of claims 33 to 55, further comprising:
a receiving unit, configured to receive a handover command, wherein the handover command comprises information of a target cell and one or more security update parameters.

57. The terminal device of claim 56, wherein the handover command is carried by an RRC reconfiguration message.

58. A network device, comprising:
a first sending unit, configured to send a candidate cell configuration, wherein the candidate cell configuration is used to assist a terminal device in performing a first handover.

59. The network device of claim 58, wherein the candidate cell configuration comprises at least one of: deployment information of one or more candidate cells, deployment information of a source cell, or one or more security update parameters.

60. The network device of claim 59, wherein the deployment information is Secondary Node (SN) information, the one or more security update parameters are one or more SN key counters, and a network key is a Master Node (MN) key.

61. The network device of claim 59, wherein the deployment information is Centralized Unit (CU) information, the one or more security update parameters are one or more Next Hop Chaining Counters (NCCs), and a network key is an MN key.

62. The network device of any one of claims 58 to 61, wherein the first handover comprises at least one of: conditional primary secondary cell (pscell) change, pscell change, subsequent pscell change, L1/L2-triggered mobility (LTM), subsequent primary cell (pcell) handover, subsequent conditional pscell addition or change (SCPAC), conditional secondary cell (scell) change, pscell change, pcell change, or conditional pcell handover.

63. The network device of any one of claims 58 to 62, further comprising:
a second sending unit, configured to send a handover command, wherein the handover command comprises information of a target cell and one or more security update parameters.

64. The network device of claim 56, wherein the handover command is carried by an RRC reconfiguration message.

65. A terminal device, comprising: a processor and a memory, wherein the memory is configured to store a computer program, and the processor is configured to call and run the computer program stored in the memory to cause the terminal device to perform the method of any one of claims 1 to 25.

66. A network device, comprising: a processor and a memory, wherein the memory is configured to store a computer program, and the processor is configured to call and run the computer program stored in the memory to cause the network device to perform the method of any one of claims 26 to 32.

67. A chip, comprising: a processor, configured to call and run a computer program from a memory, to cause a device equipped with the chip to perform the method of any one of claims 1 to 25 or any one of claims 26 to 32.

68. A computer-readable storage medium, having stored thereon a computer program that, when running on a device, causes the device to perform the method of any one of claims 1 to 25 or the method of any one of claims 26 to 32.

69. A computer program product, comprising computer program instructions that cause a computer to perform the method of any one of claims 1 to 25 or the method of any one of claims 26 to 32.

70. A computer program that causes a computer to perform the method of any one of claims 1 to 25 or the method of any one of claims 26 to 32.
